# EUROPÄISCHE PATENTANMELDUNG

(11) **EP 3 670 565 A1**
(43) Veröffentlichungstag der Anmeldung: **24.06.2020**
(21) Anmeldenummer: 18213277.9
(22) Anmeldetag: 18.12.2018
(51) Int. Cl.: C08G 59/40, C08K 3/04, C09D 163/00

(54) **ÜBERLACKIERBARE HITZEHÄRTENDE EPOXIDHARZKLEBSTOFFE**

(71) Anmelder: SIKA TECHNOLOGY AG, 6340 Baar (CH)
(72) Erfinder: Krüger, Christian, 8049 Zürich (CH)
(74) Vertreter: Sika Patent Attorneys

(57) **Zusammenfassung**

Die vorliegende Erfindung betrifft hitzehärtende Epoxidharzzusammensetzungen, welche ein elektrisch leitfähiges Kohlenstoffallotrop (KA) ausgewählt aus der Liste bestehend aus Leitrussen (KA-1), Graphenen (KA-2), einwandigen Kohlenstoffnanoröhren (KA-3) und mehrwandigen Kohlenstoffnanoröhren (KA-4) enthalten. Solche Zusammensetzungen erlauben im unausgehärteten Zustand nach dem KTL-Bad ein vollständiges Beschichten der applizierten Zusammensetzung.

## Beschreibung

### Technisches Gebiet

Die vorliegende Erfindung betrifft das Gebiet der hitzehärtenden Epoxidharz-Rohbauklebstoffe.

### Stand der Technik

Hitzehärtenden Epoxidharzklebstoffe werden schon seit langem im als Klebstoffe für den Rohbau von Transportmittel eingesetzt.

Typischerweise durchläuft die Karosserie am Ende des Rohbaus ein KTL (Kathodische Tauch-Lackierung)-Bad, in dem diese mit einem sogenannten KTL-Lack beschichtet wird, welcher dann in einem KTL-Ofen eingebrannt wird. Eine gute und vollflächige KTL-Lackierung ist eine Basis für einen langfristigen Gebrach des Fahrzeugs, da er einen wesentlichen Beitrag zur Korrosionsbeständigkeit leistet.

Es hat sich jedoch gezeigt, dass die applizierten und noch nicht ausgehärteten Rohbauklebstoffe im KTL-Bad nicht oder nur teilweise mit dem KTL-Lack überzogen werden. Daraus ergeben sich nicht nur eine reduzierte Korrosionsbeständigkeit sondern auch ästhetisch wenig anspruchsvolle Oberflächen.

### Darstellung der Erfindung

Aufgabe der vorliegenden Erfindung ist es daher, hitzehärtende Epoxidharzzusammensetzungen zur Verfügung zu stellen, welche im unausgehärteten Zustand nach dem KTL-Bad ausreichend mit KTL-Lack beschichtet sind. Insbesondere im unausgehärteten Zustand ist ein vollständiges Beschichten von hitzehärtenden Epoxidharzzusammensetzungen mit KTL-Lack besonders anspruchsvoll.

Überraschenderweise wurde gefunden, dass eine einkomponentige hitzehärtende Epoxidharzzusammensetzung gemäss Anspruch 1 diese Aufgabe zu lösen vermag.

Weitere Aspekte bilden ein Verfahren zur Verklebung sowie Verwendungen und ein verklebter Artikel.

Bevorzugte Ausführungsformen der Erfindung sind Gegenstand der Unteransprüche.

### Wege zur Ausführung der Erfindung

Die vorliegende Erfindung betrifft in einem ersten Aspekt einkomponentige hitzehärtende Epoxidharzzusammensetzungen enthaltend:
- mindestens ein Epoxidharz **A** mit durchschnittlich mehr als einer Epoxidgruppe pro Molekül;
- mindestens einen Härter **B** für Epoxidharze, welcher durch erhöhte Temperatur aktiviert wird;
- mindestens ein elektrisch leitfähiges Kohlenstoffallotrop (KA) ausgewählt aus der Liste bestehend aus Leitrussen (KA-1), Graphenen (KA-2), einwandigen Kohlenstoffnanoröhren (KA-3) und mehrwandigen Kohlenstoffnanoröhren (KA-4),
wobei die Menge an Leitrussen (KA-1) 4 - 10 Gew.-%,
die Menge an Graphenen (KA-2) 4 - 7 Gew.-%,
die Menge an einwandigen Kohlenstoffnanoröhren (KA-3) 0.075 - 0.9 Gew.-%,
und die Menge an mehrwandigen Kohlenstoffnanoröhren (KA-4) 1.5 - 4 Gew.-%, beträgt, bezogen auf das Gesamtgewicht der einkomponentigen hitzehärtenden Epoxidharzzusammensetzung.

Die Epoxidharzzusammensetzungen enthält mindestens ein Epoxidharz **A** mit durchschnittlich mehr als einer Epoxidgruppe pro Molekül. Die Epoxidgruppe liegt vorzugsweise als Glycidylethergruppe vor. Das Epoxidharz **A** mit durchschnittlich mehr als einer Epoxidgruppe pro Molekül ist vorzugsweise ein Epoxid-Flüssigharz oder ein Epoxid-Festharz. Der Begriff "Epoxid-Festharz" ist dem Epoxid-Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Partikel zerkleinern.

Bevorzugte Epoxid-Festharze weisen die Formel (A-I) auf

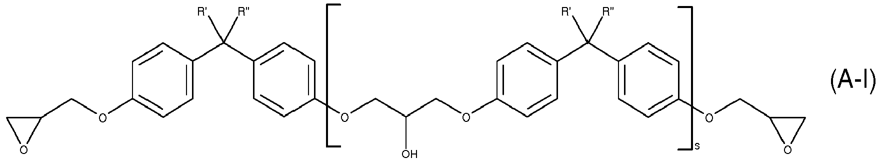

Hierbei stehen die Substituenten R' und R" unabhängig voneinander entweder für H oder CH₃. Der Term "unabhängig voneinander" in der Definition von Gruppen und Resten bedeutet in diesem Dokument jeweils, dass mehrere vorkommende aber in den Formeln gleich bezeichnete Gruppen jeweils unterschiedliche Bedeutungen aufweisen können.

Weiterhin steht der Index s für einen Wert von > 1.5, insbesondere von 2 bis 12.

Derartige Epoxid-Festharze sind kommerziell erhältlich beispielsweise von Olin oder Huntsman oder Hexion.

Verbindungen der Formel (A-I) mit einem Index s zwischen 1 und 1.5 werden vom Fachmann als Semisolid-Epoxidharze bezeichnet. Für die hier vorliegende Erfindung werden sie ebenfalls als Festharze betrachtet. Bevorzugt sind jedoch Epoxidharze im engeren Sinn, d.h. wo der Index s einen Wert von > 1.5 aufweist.

Bevorzugte Epoxid-Flüssigharze weisen die Formel (A-II) auf

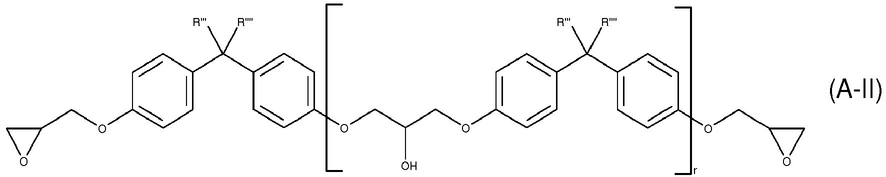

Hierbei stehen die Substituenten R'" und R"" unabhängig voneinander entweder für H oder CH₃. Weiterhin steht der Index r für einen Wert von 0 bis 1. Bevorzugt steht r für einen Wert von kleiner als 0.2.

Es handelt sich somit vorzugsweise um Diglycidylether von Bisphenol-A (DGEBA), von Bisphenol-F sowie von Bisphenol-A/F (Die Bezeichnung 'A/F' verweist hierbei auf eine Mischung von Aceton mit Formaldehyd, welche als Edukt bei dessen Herstellung verwendet wird). Solche Flüssigharze sind beispielsweise als Araldite® GY 250, Araldite® PY 304, Araldite® GY 282 (Huntsman, bzw. Hexion) oder D.E.R.™ 331 oder D.E.R.™ 330 (Olin) oder Epikote 828 (Hexion) erhältlich.

Bevorzugt stellt das Epoxidharz **A** ein Epoxid-Flüssigharz der Formel (A-II) dar. In einer noch mehr bevorzugten Ausführungsform enthält die hitzehärtende Epoxidharzzusammensetzung sowohl mindestens ein Epoxid-Flüssigharz der Formel (A-II) als auch mindestens ein Epoxid-Festharz der Formel (A-I).

Der Anteil von Epoxidharzes **A** beträgt vorzugsweise 10 - 85 Gew.-%, insbesondere 10 - 60 Gew.-%, bevorzugt 30 - 50 Gew.-%, am Gewicht der Zusammensetzung.

Die hitzehärtende Epoxidharzzusammensetzung enthält mindestens einen Härter **B** für Epoxidharze, welcher durch erhöhte Temperatur aktiviert wird. Es handelt sich hierbei vorzugsweise um einen Härter, welcher ausgewählt ist aus der Gruppe bestehend aus Dicyandiamid, Guanamine, Guanidine, Aminoguanidine und deren Derivate. Weiterhin möglich sind beschleunigend wirksame Härter, wie substituierte Harnstoffe, wie beispielsweise 3-(3-Chlor-4-methylphenyl)-1,1-dimethylharnstoff (Chlortoluron) oder Phenyl-Dimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Weiterhin können Verbindungen der Klasse der Imidazole, wie 2-Isopropylimidazol oder 2-Hydroxy-N-(2-(2-(2-hydroxyphenyl)-4,5-dihydroimidazol-1-yl)ethyl)benzamid und Amin-Komplexe eingesetzt werden.

Bevorzugt handelt es sich beim Härter **B** um einen Härter, welcher ausgewählt ist aus der Gruppe bestehend aus Dicyandiamid, Guanamine, Guanidine, Aminoguanidine und deren Derivate; substituierte Harnstoffe, insbesondere 3-(3-Chlor-4-methylphenyl)-1,1-dimethylharnstoff (Chlortoluron), oder Phenyl-Dimethylharnstoffe, insbesondere p-Chlorphenyl-N,N-dimethylharnstoff (Monuron), 3-Phenyl-1,1 -dimethylharnstoff (Fenuron), 3,4-Dichlorphenyl-N,N-dimethylharnstoff(Diuron), sowie Imidazole und Amin-Komplexe.

Besonders bevorzugt als Härter **B** ist Dicyandiamid.

Die Menge des Härters **B** für Epoxidharze, welcher durch erhöhte Temperatur aktiviert wird, beträgt vorteilhaft 0.1 - 30 Gew.-%, insbesondere 0.2 - 10 Gew.-%, bezogen auf das Gewicht des Epoxidharzes **A**.

Die hitzehärtende Epoxidharzzusammensetzung enthält mindestens ein elektrisch leitfähiges Kohlenstoffallotrop (KA) ausgewählt aus der Liste bestehend aus Leitrussen (KA-1), Graphenen (KA-2), einwandigen Kohlenstoffnanoröhren (KA-3) und mehrwandigen Kohlenstoffnanoröhren (KA-4).

Die Menge an Leitrussen (KA-1) beträgt 4 - 10 Gew.-%, vorzugsweise 4 - 9 Gew.-%, 4 - 8 Gew.-%, 4 - 7 Gew.-%, bevorzugt 4 - 6.5 Gew.-%,
die Menge an Graphenen (KA-2) beträgt 4 - 7 Gew.-%, vorzugsweise 4.5 - 6.5 Gew.-%,
die Menge an einwandigen Kohlenstoffnanoröhren (KA-3) beträgt 0. 075 - 0.9 Gew.-%, vorzugsweise 0.1 - 0.8 Gew.-%, 0.1 - 0.6 Gew.-%, 0.1 - 0.5 Gew.-%, 0.1 - 0.4 Gew.-%, insbesondere 0.1 - 0.3 Gew.-%, insbesondere bevorzugt 0.1 - 0.25 Gew.-%, am meisten bevorzugt 0.1 - 0.2 Gew.-%,
und die Menge an mehrwandigen Kohlenstoffnanoröhren (KA-4) beträgt 1.5 - 4 Gew.-%, vorzugsweise 1.5 - 3 Gew.-%, insbesondere 1.5 - 2.5 Gew.-%, insbesondere bevorzugt 1.5 - 2.25 Gew.-%, am meisten bevorzugt 1.75 - 2 Gew.-%,
bezogen auf das Gesamtgewicht der einkomponentigen hitzehärtenden Epoxidharzzusammensetzung.

Dies ist dahingehend vor Vorteil, dass dadurch eine Viskosität bei 50°C von < 2600 Pa*s, 80 - 2400 Pa*s, vorzugsweise 150 - 2000 Pa*s, insbesondere 200 - 1500 Pa*s, insbesondere bevorzugt 200 - 1000 Pa*s, am meisten bevorzugt 200 - 900 Pa*s, gewährleistet werden kann. Zusammensetzungen mit 2600 Pa*s oder höheren Viskositätswerten bei 50 °C sind für industriellen Klebstoffapplikationsverfahren nicht mehr geeignet. Vorzugsweise wird die Viskosität oszillographisch bestimmt durch ein Rheometer mit beheizbarer Platte (MCR 301, AntonPaar) (Spalt 1000 µm, Mess-Plattendurchmesser: 25 mm (Platte/Platte), Deformation 0,01 bei 5 Hz, Aufheizrate 10°C/min).

Auch führen die vorgenannten Mengenbereiche zu einer Fliessgrenze bei 25°C von 10 - 1000 Pa, vorzugsweise 30 - 800 Pa, insbesondere 30 - 600 Pa, insbesondere bevorzugt 30 - 300 Pa.

Vorzugsweise wird die Fliessgrenze bei 25°C bestimmt durch eine rotatorische Messung der Schubspannung bei einer Viskosität von 500'000 Pa*s.

Besonders bevorzugt wird die Fliessgrenze rotatorisch mittels einem Rheometer mit beheizbarer Platte (MCR 301, AntonPaar) bei 25°C (Spalt 1000 µm, Mess-Plattendurchmesser: 25 mm (Platte/Platte), bei einer fixen Scherrate von 10 s⁻¹ als Schubspannung bei einer Viskosität von 500 000 Pa*s gemessen.

Weiter gewährleisten die vorgenannten Mengenbereiche im unausgehärteten Zustand eine ausreichende Beschichtung mit KTL-Lack nach dem KTL-Bad. Insbesondere erreichen diese Zusammensetzungen einen Werte von ≥ 7 nach der Durchführung der KTL-Beschichtung im Beispielteil, was einer vollständigen Überlackierung entspricht und beispielsweise in den Tabellen 4 - 6 ersichtlich ist. Insbesondere wird innerhalb von diesem Mengenbereich eine unausgehärtete und vollständig beschichtete Klebstoffraupe erhalten mit einem spezifischen Durchgangswiderstand gemäss DIN IEC167/ IEC93/ VDE 0303 gemessen bei 23°C/50% rel. Luftfeuchtigkeit mit einer Messspannung von 10V von ≤ 5*10¹⁰ Ωxcm, insbesondere ≤ 10¹⁰ Ωxcm, bevorzugt ≤ 10⁹ Ωxcm, insbesondere bevorzugt ≤ 5*10⁸ Ωxcm, ≤ 5*10⁸ Ωxcm - 5*10⁷ Ωxcm.

Vorzugsweises handelt es sich um ein elektrisch leitfähiges Kohlenstoffallotrop (KA) mit einer elektrische Leitfähigkeit bzw. Konduktivität im Bereich von 10⁻¹³ bis 10⁵ S/cm, insbesondere 10⁻¹² bis 10⁴ S/cm, vorzugsweise 10^{- 10}bis 10³ S/cm.

Bevorzugt sind elektrisch leitfähige Kohlenstoffallotrope (KA), welche partikel- und/oder teilchenförmig ausgebildet sind. Besonders bevorzugt handelt es sich um leitfähige Kohlenstoffallotrope (KA), wobei die einzelnen Partikel bzw. Teilchen eine Form ausgewählt aus der Liste bestehend aus gekörnt, kugelförmig, gestreckt, plattenförmig, schuppenförmig, zylinderförmig, kegelförmig und kegelstumpfförmig aufweisen. Derartige Strukturen lassen sich besonders gut in die erfindungsgemäße Beschichtungszusammensetzung unter Gewährleistung einer hohen elektrischen Leitfähigkeit einbringen bzw. inkorporieren.

Vorzugsweises handelt es sich um ein elektrisch leitfähiges Kohlenstoffallotrop (KA) mit einer mittleren Teilchengröße D50 im Bereich von 0,05 nm bis 1.000 µm, insbesondere 0,1 nm bis 800 µm, vorzugsweise 1 nm bis 600 µm, bevorzugt 10 nm bis 500 µm, aufweisen.

Die erfindungsgemäß eingesetzten leitfähigen Kohlenstoffallotrope können optional funktionalisiert sein. Derartige Funktionalisierungen sind dem Fachmann grundsätzlich bekannt.

Bei dem elektrisch leitfähigen Kohlenstoffallotrop (KA) kann es sich um Leitrusse (KA-1) handeln. Vorteilhaft sind Leitrusse (KA-1), deren Primärpartikel eine mittlere Teilchengröße, insbesondere eine mittlere Teilchengröße D50, im Bereich von 1 nm bis 1.000 nm, insbesondere 10 nm bis 800 nm, vorzugsweise 50 nm bis 500 nm, aufweisen. Die Größenbestimmung kann insbesondere auf Basis einer elektronenmikroskopischen Vermessung erfolgen.

Weiter vorteilhaft sind Leitrusse (KA-1), welche eine spezifische Oberfläche (BET-Oberfläche, insbesondere gemessen nach N₂SA) im Bereich von 10 m²/g bis 2.000 m²/g, insbesondere 15 m²/g bis 1.800 m²/g, vorzugsweise 20 m²/g bis 1.700 m²/g, bevorzugt 50 m²/g bis 1.600 m²/g, am meisten bevorzugt 150 m²/g bis 500 m²/g aufweisen.

Bei dem elektrisch leitfähigen Kohlenstoffallotrop (KA) kann es sich um Graphene (KA-2) handeln, insbesondere modifizierte Graphene. Weiter kann es sich um einlagige oder mehrlagige Graphene handeln. Vorzugsweise handelt es sich um Graphene mit einer Dicke von 5-50 nm, insbesondere 10 - 20 nm.

Bei dem elektrisch leitfähigen Kohlenstoffallotrop (KA) kann es sich um einwandige Kohlenstoffnanoröhren, auch SWCNTs genannt, (KA-3) handeln.

Vorzugsweise handelt es sich um einwandige Kohlenstoffnanoröhren (KA-3) mit einem mittleren Innendurchmesser im Bereich von 0,4 bis 50 nm, insbesondere im Bereich von 1 bis 10 nm, vorzugsweise im Bereich von 1 bis 6 nm.

Weiter kann es vorteilhaft sein, wenn es sich um einwandige Kohlenstoffnanoröhren (KA-3) mit einer mittleren Länge im Bereich von 0,01 bis 1.000 µm, insbesondere im Bereich von 0,1 bis 500 µm, vorzugsweise im Bereich von 0,5 bis 200 µm, besonders bevorzugt im Bereich von 1 bis 100 µm, handelt. Vorzugsweise erfolgt die Größenbestimmung auf Basis einer elektronenmikroskopischen Vermessung von vereinzelten Röhren.

Bei dem elektrisch leitfähigen Kohlenstoffallotrop (KA) kann es sich um mehrwandige Kohlenstoffnanoröhren, auch MWNTs genannt, (KA-4) handeln.

Vorzugsweise sind die mehrwandigen Kohlenstoffnanoröhren (MWNTs) ausgewählt sein aus 2- bis 30- wandigen, vorzugsweise 3- bis 15-wandigen Kohlenstoffnanoröhren.

Vorzugsweise handelt es sich um mehrwandige Kohlenstoffnanoröhren (KA-4) mit einem mittleren Innendurchmesser im Bereich von 0,4 bis 50 nm, insbesondere im Bereich von 1 bis 10 nm, vorzugsweise im Bereich von 2 bis 6 nm.

Weiter kann es vorteilhaft sein, wenn es sich um mehrwandige Kohlenstoffnanoröhren (KA-4) mit einer mittleren Länge im Bereich von 0,01 bis 1.000 µm, insbesondere im Bereich von 0,1 bis 500 µm, vorzugsweise im Bereich von 0,5 bis 200 µm, 1 bis 100 µm, besonders bevorzugt im Bereich von 1 bis 5 µm, handelt. Vorzugsweise erfolgt die Größenbestimmung auf Basis einer elektronenmikroskopischen Vermessung von vereinzelten Röhren.

Weiter kann es bevorzugt sein, wenn die hitzehärtende Epoxidharzzusammensetzung sowohl Graphene (KA-2) als auch mehrwandigen Kohlenstoffnanoröhren (KA-4) aufweist, wobei die Menge der Summe von KA-2 und KA-4 2 - 6 Gew.-%, vorzugsweise 2.5 - 5 Gew.-%, insbesondere 2.5 - 4 Gew.-%, bezogen auf das Gesamtgewicht der einkomponentigen hitzehärtenden Epoxidharzzusammensetzung, beträgt.

Vorzugsweise beträgt das Gewichtsverhältnis von KA-2 zu KA-4 von 0.33 - 3, insbesondere 0.5 - 2, bevorzugt 0.66 - 1.5, besonders bevorzugt 0.8 - 1.2.

Dies ist dahingehend von Vorteil, dass dadurch Zusammensetzungen erhalten werden, welche eine tiefe Viskosität bei einer gleichzeitig hohen Fliessgrenze aufweisen, was besonders für eine gute Auswaschbeständigkeit bei gleichzeitig guten Applikationseigenschaften vorteilhaft ist.

Weiter ist es vorteilhaft, wenn die einkomponentige hitzehärtende Epoxidharzzusammensetzung weniger als weniger als 5 Gew.-%, weniger als 2 Gew.-%, weniger als 1 Gew.-%, weniger als 0.5 Gew.-%, insbesondere weniger als 0.1 Gew-%, am meisten bevorzugt weniger als 0.01 Gew-%, leitfähige Polymere aufweist, bezogen auf das das Gesamtgewicht der einkomponentigen hitzehärtenden Epoxidharzzusammensetzung.

Was die leitfähigen Polymere, welche synonym auch als elektrisch selbstleitende Polymere bezeichnet werden können, anbelangt, so stellen diese im Allgemeinen Kunststoffe mit elektrischer Leitfähigkeit dar. Insbesondere handelt es sich um leitfähige Polymere ausgewählt aus der Gruppe bestehend aus Polyacetylenen, Polyanilinen, Polyparaphenylenen, Polystyrolen, Polythiophenen, Polyethylen- dioxythiophenen (PEDOT), Polyethylendioxythiophenen : Polystyrolsulfonaten (PEDOT : PSS) und Polyphenylenvinylenen, insbesondere Polyacetylenen, Polyanilinen, Polyparaphenylenen, Polystyrolen und Polythiophenen.

Weiter ist es vorteilhaft, wenn die einkomponentige hitzehärtende Epoxidharzzusammensetzung weniger als weniger als 5 Gew.-%, weniger als 2 Gew.-%, weniger als 1 Gew.-%, weniger als 0.5 Gew.-%, insbesondere weniger als 0.1 Gew-%, am meisten bevorzugt weniger als 0.01 Gew-%, Additive ausgewählt aus der Liste bestehend aus Kohlenstofffasern, Graphit, Siliciumcarbid, Metalloxide, Metalle, insbesondere Eisen und Zink, Ammoniumsalze, schwermetallhaltige oder metallhaltige Füllstoffe, insbesondere antimon- und zinnhaltige Füllstoffe auf Basis Titandioxid oder Glimmer, ionische Flüssigkeiten und ionische und nicht-ionische Tenside, aufweist, bezogen auf das das Gesamtgewicht der einkomponentigen hitzehärtenden Epoxidharzzusammensetzung.

Die einkomponentige hitzehärtende Epoxidharzzusammensetzung enthält vorzugsweise mindestens einen Zähigkeitsverbesserer **D**. Die Zähigkeitsverbesserer **D** können fest oder flüssig sein.

Insbesondere ist der Zähigkeitsverbesserer **D** ausgewählt ist aus der Gruppe bestehend aus endständig blockierten Polyurethanpolymeren **D1**, Flüssigkautschuken **D2** und Core-Shell-Polymeren **D3.** Bevorzugt ist der Zähigkeitsverbesserer **D** ausgewählt ist aus der Gruppe bestehend aus endständig blockierten Polyurethanpolymeren **D1** und Flüssigkautschuken **D2**. Besonders bevorzugt handelt es sich um ein endständig blockiertes Polyurethanpolymer **D1**.

Handelt es sich bei dem Zähigkeitsverbesserer **D** um ein endständig blockiertes Polyurethanpolymer **D1**, handelt es sich vorzugsweise um ein endständig blockiertes Polyurethanprepolymer der Formel (I).

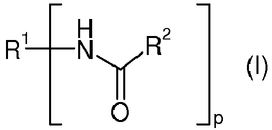

Hierbei steht R¹ für einen p-wertigen Rest eines mit Isocyanatgruppen terminierten linearen oder verzweigten Polyurethanprepolymers nach dem Entfernen der endständigen Isocyanatgruppen und p für einen Wert von 2 bis 8.

Weiterhin stehen R² unabhängig voneinander für einen Substituenten, welcher ausgewählt ist aus der Gruppe bestehend aus

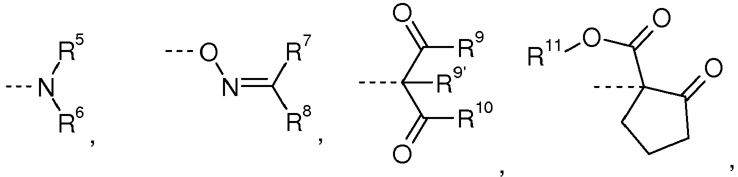

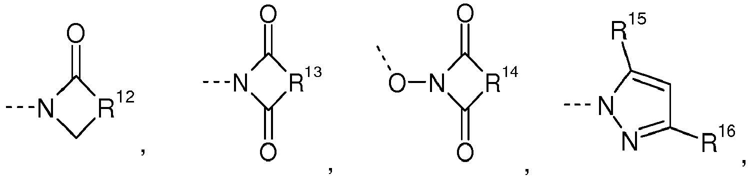

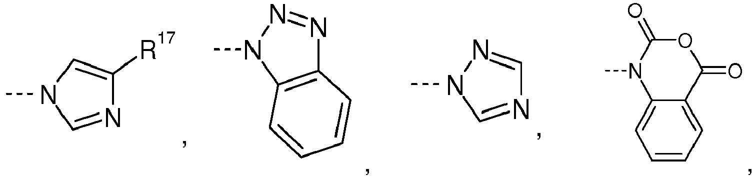

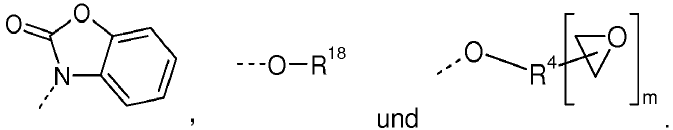

Hierbei steht R⁵, R⁶, R⁷ und R⁸ je unabhängig voneinander für eine Alkyl- oder Cycloalkyl- oder Aralkyl- oder Arylalkyl-Gruppe, oder R⁵ bildet zusammen mit R⁶, oder R⁷ zusammen mit R⁸, einen Teil eines 4- bis 7-gliedrigen Rings bilden, welcher gegebenenfalls substituiert ist.

Weiterhin stehen R^{9'} und R¹⁰ je unabhängig voneinander für eine Alkyl- oder Aralkyl- oder Arylalkyl-Gruppe oder für eine Alkyloxy- oder Aryloxy- oder Aralkyloxy-Gruppe und R¹¹ für eine Alkylgruppe.

R¹², R¹³ und R¹⁴ stehen je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe.

R¹⁵, R¹⁶ und R¹⁷ stehen je unabhängig voneinander für H oder für eine Alkylgruppe oder für eine Arylgruppe oder eine Aralkylgruppe und R¹⁸ steht für eine Aralkylgruppe oder für eine ein- oder mehrkernige substituierte oder unsubstituierte Aromatengruppe, welche gegebenenfalls aromatische Hydroxylgruppen aufweist.

Schliesslich steht R⁴ für einen Rest eines eine primäre oder sekundäre Hydroxylgruppe enthaltenden aliphatischen, cycloaliphatischen, aromatischen oder araliphatischen Epoxids nach dem Entfernen der Hydroxy- und Epoxidgruppen und m für einen Wert von 1, 2 oder 3.

Als R¹⁸ sind insbesondere einerseits Phenole oder Polyphenole, insbesondere Bisphenole, nach Entfernung einer Hydroxylgruppe zu betrachten. Bevorzugte Bespiele für derartige Phenole und Bisphenole sind insbesondere Phenol, Kresol, Resorcinol, Brenzkatechin, Cardanol (3-Pentadecenylphenol (aus Cashewnuss-Schalen-ÖI)), Nonylphenol, mit Styrol oder Dicyclopentadien umgesetzte Phenole, Bis-Phenol-A, Bis-Phenol-F und 2,2'-Diallyl-bisphenol-A. Als R¹⁸ sind andererseits insbesondere Hydroxybenzylalkohol und Benzylalkohol nach Entfernung einer Hydroxylgruppe zu betrachten.

Falls R⁵, R⁶, R⁷, R⁸, R⁹, R^{9'}, R¹⁰, R¹¹, R¹⁵, R¹⁶ oder R¹⁷ für eine Alkylgruppe steht, ist diese insbesondere eine lineare oder verzweigte C₁-C₂₀-Alkylgruppe.

Falls R⁵, R⁶, R⁷, R⁸, R⁹, ^{R9'}, ^{R10}, R¹⁵, R¹⁶, R¹⁷ oder R¹⁸ für eine Aralkylgruppe steht, ist diese Gruppierung insbesondere eine über Methylen gebundene aromatische Gruppe, insbesondere eine Benzylgruppe.

Falls R⁵, R⁶, R⁷, R⁸, R⁹, R^{9'} oder R¹⁰ für eine Alkylarylgruppe steht, ist diese insbesondere eine über Phenylen gebundene C₁- bis C₂₀-Alkylgruppe, wie beispielsweise Tolyl oder Xylyl.

Die Reste R² sind vorzugsweise die Substituenten der Formeln

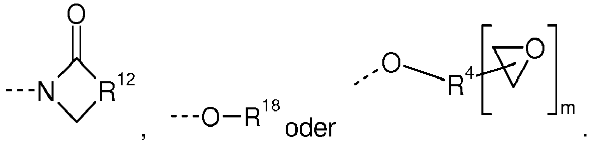

Als Substituent der Formel 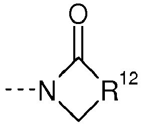 ist ε-Caprolactam nach Entfernung des NH-Protons bevorzugt.

Als Substituent der Formel ---O-R¹⁸ sind Monophenole oder Polyphenole, insbesondere Bisphenole, nach Entfernung eines phenolischen Wasserstoffatoms bevorzugt. Besonders bevorzugte Bespiele für derartigen Reste R² sind Reste, welche ausgewählt sind aus der Gruppe bestehend aus

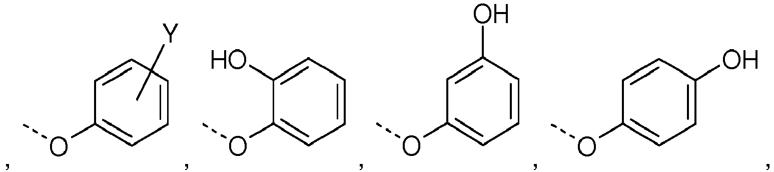

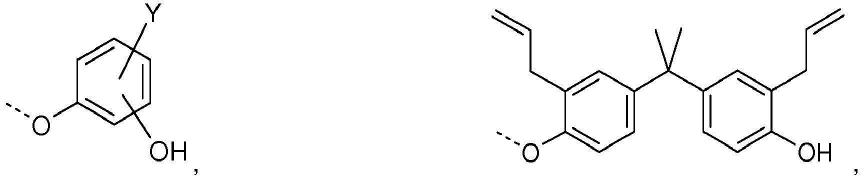

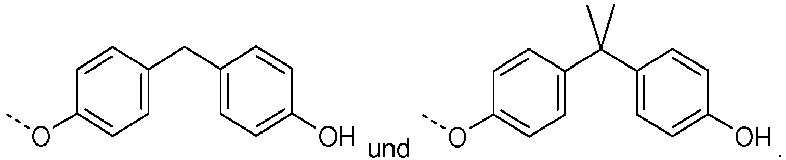

Der Rest Y steht hierbei für einen gesättigten, aromatischen oder olefinisch ungesättigten Kohlenwasserstoffrest mit 1 bis 20 C-Atomen, insbesondere mit 1 bis 15 C-Atomen. Als Y sind insbesondere Allyl, Methyl, Nonyl, Dodecyl, Phenyl, Alkylether, Carbonsäureester oder ein ungesättigter C₁₅-Alkylrest mit 1 bis 3 Doppelbindungen bevorzugt.

Meist bevorzugt steht R² für ---O-R¹⁸.

Die Herstellung des endständig blockierten Polyurethanprepolymers der Formel (I) erfolgt aus dem Isocyanatgruppen terminierten linearen oder verzweigten Polyurethanprepolymer mit einer oder mehreren Isocyanat-reaktiven Verbindungen R²H. Falls mehrere derartige Isocyanat-reaktive Verbindungen eingesetzt werden, kann die Reaktion sequentiell oder mit einer Mischung dieser Verbindungen erfolgen.

Die Umsetzung erfolgt bevorzugt so, dass die eine oder die mehreren Isocyanat-reaktiven Verbindungen R²H stöchiometrisch oder im stöchiometrischen Überschuss eingesetzt werden, um zu gewährleisten, dass alle NCO-Gruppen umgesetzt sind.

Das Polyurethanprepolymer mit Isocyanat-Endgruppen, auf dem R¹ basiert, lässt sich aus mindestens einem Diisocyanat oder Triisocyanat sowie aus einem Polymeren **Q_{PM}** mit endständigen Amino-, Thiol- oder Hydroxylgruppen und/oder aus einem, gegebenenfalls substituierten, Polyphenol **Q_{PP}** herstellen.

Geeignete Diisocyanate sind aliphatische, cycloaliphatische, aromatische oder araliphatische Diisocyanate, insbesondere handelsübliche Produkte wie Methylendiphenyldiisocyanat (MDI), Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(isocyanatomethyl)-bicyclo[2.2.1]heptan, 1,5-Naphthalindiisocyanat (NDI), Dicyclohexylmethyldiisocyanat (H₁₂MDI), p-Phenylendiisocyanat (PPDI), m-Tetramethylxylylen diisocyanat (TMXDI), etc. sowie deren Dimere. Bevorzugt sind HDI, IPDI, MDI oder TDI.

Geeignete Triisocyanate sind Trimere oder Biurete von aliphatischen, cycloaliphatischen, aromatischen oder araliphatischen Diisocyanaten, insbesondere die Isocyanurate und Biurete der im vorherigen Absatz beschriebenen Diisocyanate. Selbstverständlich können auch geeignete Mischungen von Di- oder Triisocyanaten eingesetzt werden.

Als Polymere **Q_{PM}** mit endständigen Amino-, Thiol- oder Hydroxylgruppen sind insbesondere geeignet Polymere **Q_{PM}** mit zwei oder drei endständigen Amino-, Thiol- oder Hydroxylgruppen.

Die Polymere **Q_{PM}** weisen vorteilhaft ein Equivalenzgewicht von 300 - 6000, insbesondere von 600 - 4000, bevorzugt von 700 - 2200 g/Equivalent NCOreaktiver Gruppen auf.

Als Polymere **Q_{PM}** bevorzugt sind Polyole mit mittleren Molekulargewichten zwischen 600 und 6000 Dalton ausgewählt aus der Gruppe bestehend aus Polyethylenglykolen, Polypropylenglykolen, Polyethylenglykol-Polypropylenglykol-Blockpolymeren, Polybutylenglykolen, hydroxylterminierte Polybutadiene, hydroxylterminierte Butadien-Acrylnitril-Copolymere sowie deren Gemische.

Als Polymere **Q_{PM}** sind insbesondere bevorzugt α,ω-Dihydroxypolyalkylenglykole mit C₂-C₆-Alkylengruppen oder mit gemischten C₂-C₆-Alkylengruppen, die mit Amino-, Thiol- oder, bevorzugt, Hydroxylgruppen terminiert sind. Besonders bevorzugt sind Polypropylenglykole oder Polybutylenglykole. Weiterhin besonders bevorzugt sind Hydroxylgruppen-terminierte Polyoxybutylene.

Als Polyphenol **Q_{PP}** sind insbesondere geeignet Bis-, Tris- und Tetraphenole. Hierunter werden nicht nur reine Phenole, sondern gegebenenfalls auch substituierte Phenole verstanden. Die Art der Substitution kann sehr vielfältig sein. Insbesondere wird hierunter eine Substitution direkt am aromatischen Kern, an den die phenolische OH-Gruppe gebunden ist, verstanden. Unter Phenolen werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen.

In einer bevorzugten Ausführungsform wird das Polyurethanprepolymer aus mindestens einem Diisocyanat oder Triisocyanat sowie aus einem Polymeren **Q_{PM}** mit endständigen Amino-, Thiol- oder Hydroxylgruppen hergestellt. Die Herstellung des Polyurethanprepolymers erfolgt in einer dem Polyurethan-Fachmann bekannten Art und Weise, insbesondere, indem das Diisocyanat oder Triisocyanat in einem stöchiometrischen Überschuss in Bezug auf die Amino-, Thiol- oder Hydroxylgruppen des Polymeren **Q_{PM}** eingesetzt wird.

Das Polyurethanprepolymer mit Isocyanatendgruppen weist bevorzugt elastischen Charakter auf. Es zeigt bevorzugt eine Glasumwandlungstemperatur Tg von kleiner als 0°C.

Bei dem Zähigkeitsverbesserer D kann es sich um einen Flüssigkautschuk **D2** handeln. Hierbei kann es sich z.B. um ein carboxyl- oder epoxidterminiertes Polymer handeln.

In einer ersten Ausführungsform kann dieser Flüssigkautschuk ein carboxyl- oder epoxidterminiertes Acrylnitril/Butadien-Copolymer oder ein Derivat davon sein. Derartige Flüssigkautschuke sind z.B. unter dem Namen Hypro / Hypox® CTBN und CTBNX und ETBN von Emerald Perfomance Materials, kommerziell erhältlich. Als Derivate sind insbesondere Epoxidgruppen aufweisende Elastomer-modifizierte Prepolymere, wie sie unter der Produktlinie Struktol®, insbesondere aus der Produktelinie Polydis®, Polycavit®, Polyvertec®, von der Firma Struktol® (Schill+Seilacher Gruppe, Deutschland) oder unter der Produktlinie Albipox (Evonik, Deutschland) kommerziell vertrieben werden, geeignet.

In einer zweiten Ausführungsform kann dieser Flüssigkautschuk ein Polyacrylatflüssigkautschuk sein, der mit flüssigen Epoxidharzen vollständig mischbar ist und sich erst beim Aushärten der Epoxidharzmatrix zu Mikrotröpfchen entmischt. Derartige Polyacrylatflüssigkautschuke sind z.B. unter der Bezeichnung 20208-XPA von Dow erhältlich.

Es können natürlich auch Mischungen von Flüssigkautschuken verwendet werden, insbesondere Mischungen von carboxyl- oder epoxidterminierten Acrylnitril/Butadien-Copolymeren oder von Derivaten davon.

Der Zähigkeitsverbesserer **D** kann in einer dritten Ausführungsform ein Core-Shell Polymer **D3** sein. Core-Shell-Polymere bestehen aus einem elastischen Kernpolymer und einem starren Schalen-Polymer. Besonders geeignete Core-Shell-Polymere bestehen aus einem Kern (Core) aus elastischem Acrylat- oder Butadien-Polymer, den eine starre Schale (Shell) eines starren thermoplastischen Polymers umhüllt. Diese Core-Shell Struktur bildet sich entweder spontan durch Entmischen eines Blockcopolymeren oder ist durch die Polymerisationsführung als Latex oder Suspensions-polymerisation mit nachfolgender Pfropfung vorgegeben. Bevorzugte Core-Shell-Polymere sind sogenannte MBS Polymere, welche kommerziell unter dem Handelsnamen KaneACe™ von Kaneka, Clearstrength™ von Arkema, Paraloid™ von Dow oder F-351™ von Zeon erhältlich sind.

Vorzugsweise beträgt der Anteil an Zähigkeitsverbesserer **D** von 5 - 50 Gew.-%, 10 - 40 Gew.-%, besonders bevorzugt 15 - 30 Gew.-%, bezogen auf das Gesamtgewicht der Epoxidharzzusammensetzung.

In einer weiteren bevorzugten Ausführungsform enthält die Zusammensetzung zusätzlich mindestens einen Füllstoff **F**. Bevorzugt handelt es sich hierbei um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Insbesondere ist der Füllstoff **F** ausgewählt aus der Gruppe bestehend aus Wollastonit, Calciumcarbonat und pyrogene Kieselsäuren.

Vorteilhaft beträgt der Gesamtanteil des gesamten Füllstoffs **F** 5 - 40 Gewichts-%, vorzugsweise 10 - 30 Gewichts-%, bezogen auf das Gesamtgewicht der Epoxidharzzusammensetzung.

In einer weiteren bevorzugten Ausführungsform enthält die Zusammensetzung zusätzlich mindestens einen Epoxidgruppen-tragenden Reaktivverdünner **G**. Solche Reaktivverdünner sind dem Fachmann bekannt. Bevorzugte Beispiele für Epoxidgruppen-tragende Reaktivverdünner sind:
- Glycidylether von monofunktionellen gesättigten oder ungesättigten, verzweigten oder unverzweigten, zyklischen oder offenkettigen C₄ - C₃₀ Alkoholen, z.B. Butanolglycidylether, Hexanolglycidylether, 2-Ethylhexanolglycidylether, Allylglycidylether, Tetrahydrofurfuryl- und Furfurylglycidylether, Trimethoxysilylglycidylether etc.
- Glycidylether von difunktionellen gesättigten oder ungesättigten, verzweigten oder unverzweigten, zyklischen oder offenkettigen C₂ - C₃₀ Alkolen, z.B Ethylenglykol-, Butandiol-, Hexandiol-, Oktandiolgylcidylether, Cyclohexandimethanoldigylcidylether, Neopentylglycoldiglycidylether etc.
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol, Glycerin, Trimethylolpropan etc.
- Glycidylether von Phenol- und Anilinverbindungen wie Phenylglycidylether, Kresylglycidylether, p-tert.-Butylphenylglycidylether, Nonylphenolglycidylether, 3-n-Pentadecenyl-glycidylether (aus Cashewnuss-Schalen-Öl), N,N-Diglycidylanilin etc.
- Epoxidierte Amine wie N, N-Diglycidylcyclohexylamin etc.
- Epoxidierte Mono- oder Dicarbonsäuren wie Neodecansäure-glycidylester, Methacrylsäureglycidylester, Benzoesäureglycidylester, Phthalsäure-, Tetra- und Hexahydrophthalsäurediglycidylester, Diglycidylester von dimeren Fettsäuren etc.
- Epoxidierte di- oder trifunktionelle, nieder- bis hochmolekulare Polyetherpolyole wie Polyethylenglycol-diglycidylether, Polypropyleneglycol-diglycidylether etc.

Besonders bevorzugt sind Hexandioldiglycidylether, Kresylglycidylether, p-*tert*.-Butylphenylglycidylether, Polypropylenglycoldiglycidylether und Polyethylenglycoldiglycidylether.

Vorteilhaft beträgt der Gesamtanteil des epoxidgruppentragenden Reaktivverdünners **G** 0.1 - 15 Gewichts-%, vorzugsweise 0.1 - 5 Gewichts-%, insbesondere bevorzugt 0.1 - 2 Gewichts-%, bezogen auf das Gesamtgewicht der Epoxidharzzusammensetzung.

Die Zusammensetzung kann weitere Bestandteile, insbesondere Katalysatoren, Stabilisatoren, insbesondere Hitze- und/oder Lichtstabilisatoren, Thixotropiermittel, Weichmacher, Lösungsmittel, mineralische oder organische Füllstoffe, Treibmittel, Farbstoffe und Pigmente, Korrosionsschutzmittel, Tenside, Entschäumer und Haftvermittler umfassen.

Als Weichmacher eignen sich insbesondere Phenol-Alkylsulfonsäureester oder Benzolsulfonsäure-N-butylamid, wie sie als Mesamoll® bzw. Dellatol BBS von Bayer kommerziell erhältlich sind.

Als Stabilisatoren eignen sich insbesondere gegebenenfalls substituierte Phenole, wie BHT oder Wingstay® T (Elikem), sterisch gehinderte Amine oder N-Oxylverbindungen wie TEMPO (Evonik).

Eine besonders bevorzugte einkomponentige Epoxidharzzusammensetzung umfasst:
- 10 - 60 Gew.-%, insbesondere 30 - 50 Gew.-%, bezogen auf das Gesamtgewicht der Epoxidharzzusammensetzung, Epoxidharz **A** mit durchschnittlich mehr als einer Epoxidgruppe pro Molekül; vorzugsweise handelt es sich bei 50-100 Gew.-%, insbesondere 80-100 Gew.-%, des Epoxidharzes **A** um ein Epoxid-Flüssigharz und bei 0-30 Gew.-%, insbesondere 0-20 Gew.-%, besonders bevorzugt 5-15 Gew.-%, des Epoxidharzes **A** um ein Epoxid-Festharz;.
- mindestens einen latenten Härter für Epoxidharze **B**, vorzugsweise ausgewählt aus Dicyandiamid, Guanaminen, Guanidinen, Anhydriden von mehrwertigen Carbonsäuren, Dihydraziden, und Aminoguanidinen, sowie deren Derivaten, wobei Dicyandiamid bevorzugt ist;
- vorzugsweise mindestens einen Beschleuniger **C**, ausgewählt aus der Liste bestehend aus substituierten Harnstoffen, Imidazolen, Imidazolinen und blockierten Aminen, insbesondere ausgewählt ist aus der Liste bestehend aus substituierten Harnstoffen und blockierten Aminen, insbesondere bevorzugt substituierten Harnstoffen;
- mindestens einen Zähigkeitsverbesserer **D**, ausgewählt ist aus der Gruppe bestehend aus endständig blockierten Polyurethanpolymeren **D1**, Flüssigkautschuken **D2** und Core-Shell-Polymeren **D3**, vorzugsweise beträgt dabei der Anteil an Zähigkeitsverbesserer **D** 5 -50 Gew.-%, 10 - 40 Gew.-%, besonders bevorzugt 15 -30 Gew.-%, bezogen auf das Gesamtgewicht der Epoxidharzzusammensetzung;
- vorzugsweise 5 - 40 Gewichts-%, vorzugsweise 10 - 30 Gewichts-%, bezogen auf das Gesamtgewicht der Epoxidharzzusammensetzung, von einem Füllstoffe **F** ausgewählt vorzugsweise aus der Gruppe bestehend aus Wollastonit, Calciumcarbonat, und pyrogene Kieselsäuren;
- vorzugsweise 0.1 - 15 Gewichts-%, vorzugsweise 0.1 - 5 Gewichts-%, insbesondere bevorzugt 0.1 - 2 Gewichts-%, besonders bevorzugt 0.2 - 1 Gewichts-%, bezogen auf das Gesamtgewicht der Epoxidharzzusammensetzung, von einen Epoxidgruppen-tragenden Reaktivverdünner **G**;
- wobei die Menge an Leitrussen (KA-1) 4 - 10 Gew.-%, vorzugsweise 4 - 9 Gew.-%, 4 - 8 Gew.-%, 4 - 7 Gew.-%, bevorzugt 4 - 6.5 Gew.-%,
die Menge an Graphenen (KA-2) 4 - 7 Gew.-%, vorzugsweise 4.5 - 6.5 Gew.-%,
die Menge an einwandigen Kohlenstoffnanoröhren (KA-3) 0. 075 - 0.9 Gew.-%, vorzugsweise 0.1 - 0.8 Gew.-%, 0.1 - 0.6 Gew.-%, 0.1 - 0.5 Gew.-%, 0.1 - 0.4 Gew.-%, insbesondere 0.1 - 0.3 Gew.-%, insbesondere bevorzugt 0.1 - 0.25 Gew.-%, am meisten bevorzugt 0.1 - 0.2 Gew.-%,
und die Menge an mehrwandigen Kohlenstoffnanoröhren (KA-4) 1.5 - 4 Gew.-%, vorzugsweise 1.5 - 3 Gew.-%, insbesondere 1.5 - 2.5 Gew.-%, insbesondere bevorzugt 1.5 - 2.25 Gew.-%, am meisten bevorzugt 1.75 - 2 Gew.-%, beträgt, bezogen auf das Gesamtgewicht der einkomponentigen hitzehärtenden Epoxidharzzusammensetzung.

Weiter kann es vorteilhaft sein, wenn die bevorzugte einkomponentige Epoxidharzzusammensetzung zu mehr als 80 Gewichts-%, vorzugsweise mehr als 90 Gewichts-%, insbesondere mehr als 95 Gewichts-%, insbesondere bevorzugt mehr als 98 Gewichts-%, am meisten bevorzugt mehr als 99 Gewichts-%, bezogen auf das Gesamtgewicht der Epoxidharzzusammensetzung, aus den vorgenannten Bestandteilen besteht.

Besonders bevorzugt handelt es sich um hitzehärtende Epoxidharzzusammensetzungen, welche im unausgehärteten Zustand:
- eine Viskosität bei bei 50°C von < 2600 Pa*s, 80 - 2400 Pa*s, vorzugsweise 150 - 2000 Pa*s, insbesondere 200 - 1500 Pa*s, insbesondere bevorzugt 200 - 1000 Pa*s, am meisten bevorzugt 200 - 900 Pa*s, insbesondere oszillographisch bestimmt durch ein Rheometer mit beheizbarer Platte (MCR 301, AntonPaar) (Spalt 1000 µm, Mess-Plattendurchmesser: 25 mm (Platte/Platte), Deformation 0,01 bei 5 Hz, Aufheizrate 10°C/min), und/oder
- eine Fliessgrenze von 10 - 1000 Pa, vorzugsweise 30 - 800 Pa, insbesondere 30 - 600 Pa, insbesondere bevorzugt 30 - 300 Pa, insbesondere rotatorisch mittels einem Rheometer mit beheizbarer Platte (MCR 301, AntonPaar) bei 25 °C (Spalt 1000 µm, Mess-Plattendurchmesser: 25 mm (Platte/Platte), bei einer fixen Scherrate von 10 s⁻¹ als Schubspannung bei einer Viskosität von 500 000 Pa*s gemessen, und/oder
- einen Wert von ≥ 7 nach der Durchführung der KTL-Beschichtung wie im Beispielteil beschrieben, aufweist.

Besonders bevorzugt handelt es sich um hitzehärtende Epoxidharzzusammensetzungen, welche im ausgehärteten Zustand:
- eine Zugscherfestigkeit, insbesondere gemessen nach DIN EN 1465, besonders bevorzugt wie in dem Beispielteil beschrieben, von mehr als 10 MPa, mehr als 15 MPa, mehr als 20 MPa, aufweisen, und/oder
- eine Zugfestigkeit, insbesondere gemessen nach DIN EN ISO 527, besonders bevorzugt wie in dem Beispielteil beschrieben, von mehr als 10 MPa, mehr als 15 MPa, mehr als 20 MPa, aufweisen, und/oder
- eine Bruchdehnung, insbesondere gemessen nach DIN EN ISO 527, besonders bevorzugt wie in dem Beispielteil beschrieben, von 1 - 30%, 2 - 20%, 3 - 10%, aufweisen, und/oder
- ein E-Modul, insbesondere gemessen nach DIN EN ISO 527, besonders bevorzugt wie in dem Beispielteil beschrieben, von 300 - 3500 MPa, von 1000 - 3000 MPa, vorzugsweise 1000 - 2000 MPa, aufweisen.
- einem spezifischen Durchgangswiderstand gemäss DIN IEC167/ IEC93/ VDE 0303 gemessen bei 23°C/50% rel. Luftfeuchtigkeit mit einer Messspannung von 10V von ≤ 5*10¹⁰ Ωxcm, insbesondere ≤ 10¹⁰ Ωxcm, bevorzugt ≤ 10⁹ Ωxcm, insbesondere bevorzugt ≤ 5*10⁸ Ωxcm, ≤ 5*10⁸ Ωxcm - 5*10⁷ Ωxcm, aufweist. Vorzugsweise wird der spezifische Durchgangswiderstand bestimmt wie im Beispielteil beschrieben.

Der ausgehärtete Zustand wird vorzugsweise erhalten durch ein Erhitzen der Zusammensetzung auf eine Temperatur von 140 - 220°C, insbesondere von 140 - 200°C, bevorzugt zwischen 160 und 190°C, insbesondere für 10 - 60 min, besonders bevorzugt für 20 - 45 min.

Es hat sich gezeigt, dass sich die erfindungsgemässen hitzehärtenden Epoxidharzzusammensetzungen besonders als einkomponentige Klebstoffe verwendet werden können.

Somit betrifft die Erfindung in einem weiteren Aspekt eine Verwendung der vorgängig beschriebenen einkomponentigen hitzehärtenden Epoxidharzzusammensetzung als einkomponentigen hitzehärtenden Klebstoff, insbesondere als hitzehärtender einkomponentiger Rohbauklebstoff im Fahrzeugbau.

Solche Klebstoffe werden für das Verkleben von hitzestabilen Materialien benötigt. Unter hitzestabilen Materialien werden Materialien verstanden, welche bei einer Aushärtetemperatur von 140 - 220°C, vorzugsweise 140 - 200°C zumindest während der Aushärtezeit formstabil sind. Insbesondere handelt es sich hierbei um Metalle und Kunststoffe wie ABS, Polyamid, Polyphenylenether, Verbundmaterialien wie SMC, ungesättigte Polyester GFK, Epoxid- oder Acrylatverbundwerkstoffe. Bevorzugt ist die Anwendung, bei der zumindest ein Material ein Metall ist. Als besonders bevorzugte Verwendung gilt das Verkleben von gleichen oder verschiedenen Metallen, insbesondere im Rohbau in der Automobilindustrie. Die bevorzugten Metalle sind vor allem Stahl, insbesondere elektrolytisch verzinkter, feuerverzinkter, beölter Stahl, Bonazink-beschichteter Stahl, und nachträglich phosphatierter Stahl, sowie Aluminium insbesondere in den im Autobau typischerweise vorkommenden Varianten.

Ein weiterer Aspekt der Erfindung betrifft somit ein Verfahren zum Verkleben von hitzestabilen Substraten, welche die folgenden Schritte aufweisen
i) Applizieren einer einkomponentigen hitzehärtenden Epoxidharzzusammensetzung, wie sie vorgängig beschrieben wurde, auf die Oberfläche eines hitzestabilen Substrates **S1**, insbesondere eines Metalls;
ii) Kontaktieren der applizierten hitzehärtenden Epoxidharzzusammensetzung mit der Oberfläche eines weiteren hitzestabilen Substrates S2, insbesondere eines Metalls;
iii) In Kontaktbringen der Substrate **S1** und **S2** und der damit in Kontakt stehenden hitzehärtenden Epoxidharzzusammensetzung mit einem KTL-Lackierlösung, insbesondere bei einer Temperatur zwischen 20 und 80°C, insbesondere zwischen 20 und 50°C; bevorzugt zwischen 20 und 40°C, insbesondere für 1 - 15 min, besonders bevorzugt für 1 - 5 min;
iv) Erhitzen der Zusammensetzung auf eine Temperatur von 140 - 220°C, insbesondere von 140 - 200°C, bevorzugt zwischen 160 und 190°C, insbesondere für 10 - 60 min, besonders bevorzugt für 20 - 45 min.

Das Substrat **S2** besteht hierbei aus dem gleichen oder einem unterschiedlichen Material wie das Substrat **S1**.

Insbesondere handelt es sich beim hitzestabilen Substrat **S1** und/oder **S2** um Metalle und Kunststoffe wie ABS, Polyamid, Polyphenylenether, Verbundmaterialien wie SMC, ungesättigte Polyester GFK, Epoxid- oder Acrylatverbundwerkstoffe. Bevorzugt ist die Anwendung, bei der zumindest ein Material ein Metall ist. Als besonders bevorzugte Verwendung gilt das Verkleben von gleichen oder verschiedenen Metallen, insbesondere im Rohbau in der Automobilindustrie. Die bevorzugten Metalle sind vor allem Stahl, insbesondere elektrolytisch verzinkter, feuerverzinkter, beölter Stahl, Bonazink-beschichteter Stahl, und nachträglich phosphatierter Stahl, sowie Aluminium insbesondere in den im Autobau typischerweise vorkommenden Varianten.

Somit wird bevorzugt, dass ist das Substrat **S1** und/oder das Substrat **S2** ein Metall ist.

Vorzugsweise werden die Schritte i) bis iv) in dieser Reihenfolge durchgeführt. Weiter ist es vorteilhaft, wenn vor dem Schritt iii) keine vollständige Aushärtung der applizierten Epoxidharzzusammensetzung stattfindet, insbesondere keine Aushärtung durch Erhitzen der Zusammensetzung auf eine Temperatur von 140 - 220°C, insbesondere für 10 - 60 min, besonders bevorzugt für 20 - 45 min.

Schritt iii) erfolgt typischerweise durch Eintauchen in ein KTL-bad enthaltend eine KTL-Lackierlösung. Bevorzugte Lackierlösungen sind beispielsweise als kationische Elektrotauchlacke beschrieben im Römpp Chemie Lexikon, online-Version, Georg Thieme Verlag, abgerufen am 14 Dezember 2018.

Schritt iv) erfolgt typischerweise in einem KTL-Ofen. Durch das Erhitzen der Zusammensetzung in Schritt iv) härtet die Zusammensetzung aus.

Aus einem derartigen Verfahren zum Verkleben von hitzestabilen Materialien resultiert ein verklebter Artikel, was einen weiteren Aspekt der vorliegenden Erfindung darstellt. Ein derartiger Artikel ist vorzugsweise ein Fahrzeug oder ein Teil eines Fahrzeugs, insbesondere ein Anbauteil eines Fahrzeugs.

Weiterhin umfasst die Erfindung die Verwendung mindestens eines elektrisch leitfähigen Kohlenstoffallotrops (KA) ausgewählt aus der Liste bestehend aus Leitrussen (KA-1), Graphenen (KA-2), einwandigen Kohlenstoffnanoröhren (KA-3) und mehrwandigen Kohlenstoffnanoröhren (KA-4), wie sie vorgehend beschrieben sind, zur Verminderung des spezifischen Durchgangswiderstands gemäss DIN IEC167/ IEC93/ VDE 0303 gemessen bei 23°C/50% rel. Luftfeuchtigkeit mit einer Messspannung von 10V einer ausgehärteten einkomponentigen hitzehärtenden Epoxidharzzusammensetzung, insbesondere eines ausgehärteten hitzehärtenden Epoxidharzklebstoffs, vorzugsweise im Fahrzeugbau, in einem KTL-Beschichtungsverfahren. Vorzugsweise handelt es sich um eine hitzehärtende Epoxidharzzusammensetzung wie sie vorgehend beschrieben wurde. Vorzugsweise handelt es sich um ein vorgehend beschriebenes KTL-Beschichtungsverfahren, insbesondere ein KTL-Beschichtungsverfahren wie es vorgehend, insbesondere im Beispielteil, beschrieben ist.

Die Verminderung des spezifischen Durchgangswiderstands bezieht sich auf den Vergleich zu einkomponentigen hitzehärtenden Epoxidharzzusammensetzungen welche keine der vorgehend erwähnten elektrisch leitfähigen Kohlenstoffallotrope (KA) enthalten. Der spezifische Durchgangswiderstand wird vorzugsweise bestimmt wie es im Beispielteil beschrieben ist.

Vorzugsweise beträgt die Verminderung mehr als 10⁴ Ωxcm, insbesondere mehr als 10⁵ Ωxcm, bevorzugt mehr als 10⁶ Ωxcm.

Vorzugsweise beträgt die Art und Menge der eingesetzten elektrisch leitfähigen Kohlenstoffallotrope (KA) der vorgehend beschriebenen Art und Menge, insbesondere werden auch die vorgehend als bevorzugt ausgewiesenen Arten und Mengen bevorzugt eingesetzt.

### Beispiele

### Herstellung der Zusammensetzungen

Es wurden gemäss den Angaben in den Tabellen 1 - 6 die Referenzzusammensetzungen R1 - R18 sowie die erfindungsgemässen Zusammensetzungen E1 - E10 hergestellt.

Mit Ausnahme der Zusammensetzung R2 wurde für jede Zusammensetzung die in der Tabelle 1 aufgeführte Menge in Gew.-% an Zink, Basionics, Russ oder KA-1 bis KA-4 zugegeben und im Gegenzug die entsprechende Menge an Füllstoffgemisch entfernt. So wurde bei der Zusammensetzung E1 beispielsweise 1 Gew.-% von dem Produkt Tubal Matrix 201 eingesetzt und entsprechend nur 24.6 Gew.-% Füllstoffgemisch zugegeben.

Die Zusammensetzung R2 wurde gemäss Tabelle 2 hergestellt.

**Tabelle 1, Eingesetzte Rohstoffe für Zusammensetzung R1, R3 - R18 und E1 - E10**

| **Rohstoffe** | **(Gew.-%)** |
|---|---|
| Epoxy-Flüssigharz, D.E.R. 331 (Bisphenol-A-diglycidylether), Olin | 48 |
| Reaktivverdünner, Hexandiol-glycidylether, Denacol EX-212, Nagase America | 2 |
| Zähigkeitsverbesserer D-1 | 16 |
| Härter, Dicyandiamid (= "Dicy") | 4.2 |
| Beschleuniger, substituierter Harnstoff | 0.2 |
| Füllstoffgemisch, Gemisch aus Calciumcarbonat und Calciumoxid | 25.6 |
| Pyrogene Kieselsäure, Aerosil R 202, Evonik | 4 |
| **Total (Gew.-%)** | **100** |

**Tabelle 2, Eingesetzte Rohstoffe für Zusammensetzung R2**

| **Rohstoffe** | **(Gew.-%)** |
|---|---|
| Farbzinkstaub | 66 |
| Epoxy-Flüssigharz, D.E.R. 331 (Bisphenol-A-diglycidylether), Olin | 16.2 |
| Reaktivverdünner, Hexandiol-glycidylether, Denacol EX-212, Nagase America | 4 |
| Zähigkeitsverbesserer D-1 | 8 |
| Härter, Dicyandiamid (= "Dicy") | 1.7 |
| Beschleuniger, substituierter Harnstoff | 0.1 |
| Füllstoffgemisch, Gemisch aus Calciumcarbonat und Calciumoxid | 2 |
| Pyrogene Kieselsäure, Aerosil R 202, Evonik | 2 |
| **Total (Gew.-%)** | **100** |

**Tabelle 3**

| | |
|---|---|
| KA-1 | Leitruss Vulcan XC72R, mittlere Teilchengröße D50 50 nm, spezifische Oberfläche (N₂SA) 254 m²/g, 325 mesh residue (ppm) nach ASTM D1514 <10 ppm, OAN (cc/100g), 192, ASTM D2414, Cabot |
| KA-2 | Graphene Nanoplatelets CP 0068, Dicke 11-15 nm, spezifische Oberfläche (SSA): 50-80 m²/g, lolitec |
| KA-3 | Tubal Matrix 201 (Epoxy Reaktivverdünner mit 10 Gewichts-% SWCNTs), einwandige Kohlenstoffnanoröhren, spezifische elektrische Leitfähigkeit von 10³ S/cm, mittlerer Innendurchmesser 1.6 nm, mittlere Länge > 5 µm, Ocsial, |
| KA-4 | Carbon Nanotubes CP 0086, mehrwandige Kohlenstoffnanoröhren (MWNTs), mittlere Länge 1.5 µm, lolitec |
| Zink | Farbzinkstaub, HZO Farbenzinkstaub superfein, mittlerer Teilchendurchmesser 3,0 - 4,5 µm (Malvern Mastersizer), Norzinco GmbH |
| Basionics | Basionics VS 03, Ionische Flüssigkeit, 1-Ethyl-3-methylimidazoliumdicyanamid, BASF |
| Russ | Elftex 575, Pigmentruss, durchschnittliche Partikelgrösse 22 µm, spezifische Oberfläche (B.E.T.) 115 m²/g, Cabot |

### Herstellung des Zähigkeitsverbesserers ("D-1")

150 g Poly-THF 2000 (OH-Zahl 57 mg/g KOH) und 150 g PolyBD R45V (OH-Zahl 46 mg/g KOH) wurden 30 Minuten unter Vakuum bei 105°C getrocknet. Nachdem die Temperatur auf 90°C reduziert worden war, wurden 61.5 g IPDI und 0.14 g Dibutylzinndilaurat zugegeben. Die Reaktion wurde unter Vakuum bei 90°C bis zur Konstanz des NCO-Gehaltes bei 3.10% nach 2.0 h geführt (berechneter NCO-Gehalt: 3.15%). Anschliessend wurden 96.1 g Cardanol als Blockierungsmittel zugegeben. Es wurde bei 105°C unter Vakuum weitergerührt bis kein freies NCO mehr nachgewiesen werden konnte. Das Produkt wurde so als Zähigkeitsverbesserer D-1 verwendet.

| |
|---|
| Poly-THF 2000 (Difunktionelles Polybutylenglykol) (OH-Equivalentgewicht = ca. 1000 g/OH-Equivalent), BASF |
| PolyBD R45V (Hydroxylterminertes Polybutadien) (OH-Equivalentqewicht = ca. 1230 g/OH-Equivalent), Cray Valley |
| Isophoron-diisocyanat (= "IPDI"), Evonik |
| Cardolite NC-700 (Cardanol, meta-substituiertes Alkenyl-mono-Phenol), Cardolite |

### Prüfmethoden:

### Zugfestigkeit (ZF), Bruchdehnung und E-Modul (DIN EN ISO 527)

Eine Klebstoffprobe wurde zwischen zwei Teflonpapieren auf eine Schichtdicke von 2mm verpresst. Nach 35 min Aushärtung bei 175°C wurden die Teflonpapiere entfernt und die Probekörper nach DIN-Norm wurden ausgestanzt. Die Prüfkörper wurden unter Normklima mit einer Zuggeschwindigkeit von 2 mm/min gemessen. Die Zugfestigkeit (ZF), Bruchdehnung und das E-Modul 0,05-0,25%, wurden gemäss DIN EN ISO 527 bestimmt.

### Zugscherfestigkeit (ZSF) (DIN EN 1465)

Gereinigte und mit Anticorit PL 3802-39S rückbeölte Prüfbleche von Stahl EIo H420 (Dicke 1,2mm) wurden auf einer Klebfläche von 25 x 10 mm mit Glaskugeln als Abstandshalter in einer Schichtdicke von 0,3 mm mit dem Klebstoff verklebt und für 35 min bei 175°C ausgehärtet. Die Zugscherfestigkeit wurde auf einer Zugmaschine bei einer Zuggeschwindigkeit von 10mm/min in einer 3-fach Bestimmung gemäss DIN EN 1465 bestimmt.

### KTL-Beschichtung

Zur Beschichtung mit einem KTL-Lack wurde die jeweilige Zusammensetzung bei Raumtemperatur als Rundraupe (Breite 15 mm, Höhe 5 mm) auf ein beöltes Blech (200 x 25 mm, elektrolytisch verzinkt, DC-04) appliziert. Im Anschluss wurde die Probe im unausgehärteten Zustand für 1 Stunde bei Raumtemperatur konditioniert.

Die Prüfkörper wurden danach vor dem KTL-Beschichten mit einem alkalischen Reiniger entfettet (Aclean 02.21 Reinigungsbad von Chemetall, 5 Minuten bei 60°C. Danach wurde der Probenkörper bei 23°C für 20 Sekunden unter fliessendem Wasser abgespühlt. Danach wurde der Probenkörper beschichtet.

Das KTL-Bad enthielt die KTL-Lackierlösung Cathogard 500 (von BASF Coatings Münster). Die Lackierzeit betrug 5 Minuten bei einer Spannung von 280 V und einer Temperatur der KTL-Lösung von 28°C.

Nach der Durchführung der KTL-Behandlung wurden die Raupen für 35 min bei 175°C ausgehärtet und die Qualität der KTL-Beschichtung der Raupe nach folgender Skala bewertet:
1: Raupe nicht überlackiert und Spalt nicht mit KTL-Beschichtung gefüllt
2: Raupe nicht überlackiert aber Spalt partiell mit KTL-Beschichtung gefüllt
3: Raupe nicht überlackiert , Spalt mit KTL-Beschichtung gefüllt
4: Raupe an den Rändern partiell überlackiert
5: Raupe an den Rändern überlackiert
6: Raupe partiell überlackiert
7: Raupe vollständig überlackiert aber Untergrund schimmert durch
8: Raupe vollständig mit schwachen Streifen überlackiert
9: Raupe vollständig mit vereinzelten schwache Streifen oder Partikeln überlackiert
10: Raupe vollständig ohne Streifen oder Partikeln überlackiert

Als ausreichend beschichtet wurden diejenigen Proben bezeichnet, die einen Wert von 7 bis 10 aufwiesen.

Zur Messung der Leitfähigkeit der Klebstoffe wurden die die gemischten Zusammensetzungen zwischen zwei Teflonfiolien gebracht und mittels einer Presse auf eine Dicke von 1-6 mm gebracht und diese Klebstoffplatten anschliessend 35 min bei 175°C ausgehärtet. Anschliessend wurde der spezifische Durchgangswiderstand jeweils gemäss DIN IEC167/ IEC93/ VDE 0303 bei 23°C/50% rel. Luftfeuchtigkeit bei einer Messspannung von 10V an den ausgehärteten Klebstoffplatten gemessen.

### Viskosität

Die Viskosität wurde oszillographisch mittels eines Rheometers mit beheizbarer Platte (MCR 301, AntonPaar) bei 50 °C gemessen (Spalt 1000 µm, Mess-Plattendurchmesser: 25 mm (Platte/Platte), Deformation 0,01 bei 5 Hz, Aufheizrate 10°C/min).

### Fliessgrenze

Die Fliessgrenze wurde rotatorisch mittels eines Rheometers mit beheizbarer Platte (MCR 301, AntonPaar) bei 25 °C (Spalt 1000 µm, Mess-Plattendurchmesser: 25 mm (Platte/Platte), bei einer fixen Scherrate von 10 s⁻¹ als Schubspannung bei einer Viskosität von 500 000 Pa*s gemessen.

**Tabelle 4, * = totaler Gehalt an SWCNTs, n.b. = nicht bestimmt, n.m. = nicht messbar, Viskosität zu hoch**

| | **R1** | **R2** | **R3** | **R4** | **R5** | **R6** | **E1** | **E2** | **E3** | **E4** |
|---|---|---|---|---|---|---|---|---|---|---|
| Zink | | 66 | | | | | | | | |
| Basionics | | | 5 | | | | | | | |
| Russ | | | | 2.5 | 15 | | | | | |
| KA-3 | | | | | | 0.25 (0.025*) | 1.00 (0.1*) | 2.00 (0.2*) | 2.50 (0.25*) | 4.00 (0.4*) |
| KA-4 | | | | | | | | | | |
| KA-2 | | | | | | | | | | |
| KA-1 | | | | | | | | | | |
| Spez. Durchgangswiderstand [Ωxcm] | 4.84E+17 | n.b | n.b. | n.b | n.b. | 7.70E+17 | 9.28E+10 | 2.15E+08 | 2.42E+08 | 1.15E+0.8 |
| ZF [MPa] | 37.8 | 17.5 | 35.3 | 25.2 | 32.9 | 38.1 | 38.7 | 32.7 | 33.8 | 33.0 |
| BD [%] | 4 | 2 | 2 | 4 | 2 | 4 | 4 | 4 | 4 | 5 |
| E-Modul [0.05-0.25%] | 2360 | 2020 | 2580 | 1920 | 2510 | 2360 | 2350 | 2200 | 2290 | 2280 |
| ZSF [MPa] | 26.8 | 27.7 | 16.7 | 29.2 | 23.2 | 29.5 | 27.5 | 25.6 | 25.6 | 25.3 |
| Viskosität 50°C [Pa*s] | 41 | 119 | n.m. | 114 | 1862 | 57 | 92 | 271 | 315 | 538 |
| Fliessgrenze 25°C [Pa*s] | 22 | 89 | n.m. | 118 | 977 | 31 | 36 | 148 | 184 | 233 |
| Überlackierbarkeit | 1 | 1 | 1 | 1 | 1 | 1 | 10 | 9 | 8 | 8 |

**Tabelle 5, * = totaler Gehalt an SWCNTs, n.m. = nicht messbar, Viskosität zu hoch**

| | **E5** | **E6** | **R7** | **R8** | **R9** | **R10** | **E7** | **R11** | **R12** | **R13** |
|---|---|---|---|---|---|---|---|---|---|---|
| Zink | | | | | | | | | | |
| Basionics | | | | | | | | | | |
| Russ | | | | | | | | | | |
| KA-3 | 5.00 (0.5*) | 7.50 (0.75*) | 10 (1*) | | | | | | | |
| KA-4 | | | | 0.25 | 0.75 | 1.00 | 2.00 | 5.00 | | |
| KA-2 | | | | | | | | | 0.25 | 1.00 |
| KA-1 | | | | | | | | | | |
| Spez. Durchgangswiderstand [Ωxcm] | 1.32E+0.8 | 1.29E+08 | 5.19E+07 | 6.88E+17 | 1.67E +17 | 2.19E+17 | 5.92E +08 | 2.24E+07 | 3.34E+17 | 6.54E+1 7 |
| ZF [MPa] | 32.4 | 27.2 | 18.5 | 35.8 | 2.6 | 31.4 | 30.6 | 31.9 | 31.1 | 27.7 |
| BD [%] | 5 | 3 | 1 | 4 | 3 | 3 | 3 | 3 | 3 | 3 |
| E-Modul [0.05-0.25%] | 2290 | 2310 | 2200 | 2370 | 2250 | 2280 | 2250 | 2420 | 2250 | 2290 |
| ZSF [MPa] | 25.2 | 22.7 | 19.4 | 28.0 | 25.2 | 24.1 | 24.5 | 24.5 | 25.1 | 21.3 |
| Viskosität 50°C [Pa*s] | 614 | 1629 | 2874 | 66 | 71 | 126 | 52 | 3159 | 65 | 30 |
| Fliessgrenze 25°C [Pa*s] | 259 | n.m. | n.m. | 61 | 67 | 140 | 541 | 0 | 65 | 13 |
| Überlackierbarkeit | 8 | 8 | 8 | 2 | 1 | 3 | 8 | 8 | 2 | 2 |

**Tabelle 6, n.m. = nicht messbar, Viskosität zu hoch**

| | **R14** | **E8** | **R15** | **R16** | **R17** | **R18** | **E9** | **E10** |
|---|---|---|---|---|---|---|---|---|
| Zink | | | | | | | | |
| Basionics | | | | | | | | |
| Russ | | | | | | | | |
| KA-3 | | | | | | | | |
| KA-4 | | | | | | | | 1.5 |
| KA-2 | 3.00 | 5.00 | 7.50 | 10.00 | | | | 1.5 |
| KA-1 | | | | | 1.00 | 3.00 | 5.00 | |
| Spez. Durchgangswiderstand [Ωxcm] | 3.96E+17 | 4.90E+08 | 2.36E+07 | 2.41E +07 | 5.23E+17 | 2.62E+17 | 9.83E+07 | 1.28E+0.8 |
| ZF [MPa] | 29.5 | 27.6 | 14.7 | 21.5 | 40.3 | 40.2 | 39.8 | 24.8 |
| BD [%] | 2 | 2 | 1 | 1 | 5 | 5 | 4 | 2 |
| E-Modul [0.05-0.25%] | 2600 | 2800 | 2890 | 3340 | 2380 | 2340 | 2400 | 2300 |
| ZSF [MPa] | 17.0 | 13.6 | 10.0 | 11.4 | 30.0 | 29.1 | 30.5 | 13.0 |
| Viskosität 50°C [Pa*s] | 54 | 390 | 5189 | 9319 | 199 | 232 | 417 | 185 |
| Fliessgrenze 25°C [Pa*s] | 49 | 551 | n.m. | n.m. | 84 | 301 | 421 | 262 |
| Überlackierbarkeit | 4 | 8 | 8 | 8 | 2 | 2 | 10 | 7 |

## Patentansprüche

1. Einkomponentige hitzehärtende Epoxidharzzusammensetzung enthaltend:
- mindestens ein Epoxidharz **A** mit durchschnittlich mehr als einer Epoxidgruppe pro Molekül;
- mindestens einen Härter **B** für Epoxidharze, welcher durch erhöhte Temperatur aktiviert wird;
- mindestens ein elektrisch leitfähiges Kohlenstoffallotrop (KA) ausgewählt aus der Liste bestehend aus Leitrussen (KA-1), Graphenen (KA-2), einwandigen Kohlenstoffnanoröhren (KA-3) und mehrwandigen Kohlenstoffnanoröhren (KA-4),
wobei die Menge an Leitrussen (KA-1) 4 - 10 Gew.-%,
die Menge an Graphenen (KA-2) 4 - 7 Gew.-%,
die Menge an einwandigen Kohlenstoffnanoröhren (KA-3) 0.075 - 0.9 Gew.-%,
und die Menge an mehrwandigen Kohlenstoffnanoröhren (KA-4) 1.5 - 4
Gew.-%, beträgt, bezogen auf das Gesamtgewicht der einkomponentigen hitzehärtenden Epoxidharzzusammensetzung.

2. Einkomponentige hitzehärtende Epoxidharzzusammensetzung gemäss Anspruch 1, **dadurch gekennzeichnet, dass**
die Menge an Leitrussen (KA-1) 4 - 9 Gew.-%, 4 - 8 Gew.-%, 4 - 7 Gew.-%, bevorzugt 4 - 6.5 Gew.-%,
die Menge an Graphenen (KA-2) 4.5 - 6.5 Gew.-%,
die Menge an einwandigen Kohlenstoffnanoröhren (KA-3) 0.1 - 0.8 Gew.-%, 0.1 - 0.6 Gew.-%, 0.1 - 0.5 Gew.-%, 0.1 - 0.4 Gew.-%, insbesondere 0.1 - 0.3 Gew.-%, insbesondere bevorzugt 0.1 - 0.25 Gew.-%, am meisten bevorzugt 0.1 - 0.2 Gew.-%,
und die Menge an mehrwandigen Kohlenstoffnanoröhren (KA-4) 1.5 - 3 Gew.-%, insbesondere 1.5 - 2.5 Gew.-%, insbesondere bevorzugt 1.5 - 2.25 Gew.-%, am meisten bevorzugt 1.75 - 2 Gew.-%, beträgt,
bezogen auf das Gesamtgewicht der einkomponentigen hitzehärtenden Epoxidharzzusammensetzung.

3. Einkomponentige hitzehärtende Epoxidharzzusammensetzung gemäss einem der vorhergehenden Ansprüche, **dadurch gekennzeichnet, dass** der Härter **B** ausgewählt ist aus der Gruppe bestehend aus Dicyandiamid, Guanamine, Guanidine, Aminoguanidine und deren Derivate; substituierte Harnstoffe, insbesondere 3-(3-Chlor-4-methylphenyl)-1,1-dimethylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff(Diuron), sowie Imidazole und Amin-Komplexe, besonders bevorzugt Dicyandiamid.

4. Einkomponentige hitzehärtende Epoxidharzzusammensetzung gemäss einem der vorhergehenden Ansprüche, **dadurch gekennzeichnet, dass** es sich um ein elektrisch leitfähiges Kohlenstoffallotrop (KA) mit einer mittleren Teilchengröße D50 im Bereich von 0,05 nm bis 1.000 µm, insbesondere 0,1 nm bis 800 µm, vorzugsweise 1 nm bis 600 µm, bevorzugt 10 nm bis 500 µm, handelt.

5. Einkomponentige hitzehärtende Epoxidharzzusammensetzung gemäss einem der vorhergehenden Ansprüche, **dadurch gekennzeichnet, dass** es sich bei dem Leitruss (KA-1) um Leitrusse handelt, deren Primärpartikel eine mittlere Teilchengröße D50 im Bereich von 1 nm bis 1.000 nm, insbesondere 10 nm bis 800 nm, vorzugsweise 50 nm bis 500 nm, aufweisen.

6. Einkomponentige hitzehärtende Epoxidharzzusammensetzung gemäss einem der vorhergehenden Ansprüche, **dadurch gekennzeichnet, dass** die hitzehärtende Epoxidharzzusammensetzung sowohl Graphene (KA-2) als auch mehrwandigen Kohlenstoffnanoröhren (KA-4) aufweist, wobei die Menge der Summe von KA-2 und KA-4 2 - 6 Gew.-%, vorzugsweise 2.5 - 5 Gew.-%, insbesondere 2.5 - 4 Gew.-%, bezogen auf das Gesamtgewicht der einkomponentigen hitzehärtenden Epoxidharzzusammensetzung, beträgt.

7. Einkomponentige hitzehärtende Epoxidharzzusammensetzung gemäss Anspruch 6, **dadurch gekennzeichnet, dass** das Gewichtsverhältnis von KA-2 zu KA-4 von 0.33 - 3, insbesondere 0.5 - 2, bevorzugt 0.66 - 1.5, besonders bevorzugt 0.8 - 1.2, beträgt.

8. Einkomponentige hitzehärtende Epoxidharzzusammensetzung gemäss einem der vorhergehenden Ansprüche, **dadurch gekennzeichnet, dass** die hitzehärtende Epoxidharzzusammensetzung eine Viskosität bei 50 °C von < 2600 Pa*s, 80 - 2400 Pa*s, vorzugsweise 150 - 2000 Pa*s, insbesondere 200 - 1500 Pa*s, insbesondere bevorzugt 200 - 1000 Pa*s, am meisten bevorzugt 200 - 900 Pa*s, aufweist, insbesondere oszillographisch bestimmt durch ein Rheometer mit beheizbarer Platte (MCR 301, AntonPaar) (Spalt 1000 µm, Mess-Plattendurchmesser: 25 mm (Platte/Platte), Deformation 0,01 bei 5 Hz, Aufheizrate 10°C/min).

9. Einkomponentige hitzehärtende Epoxidharzzusammensetzung gemäss einem der vorhergehenden Ansprüche, **dadurch gekennzeichnet, dass** die hitzehärtende Epoxidharzzusammensetzung eine Fliessgrenze von 10 - 1000 Pa, vorzugsweise 30 - 800 Pa, insbesondere 30 - 600 Pa, insbesondere bevorzugt 30 - 300 Pa, aufweist, insbesondere rotatorisch mittels einem Rheometer mit beheizbarer Platte (MCR 301, AntonPaar) bei 25°C (Spalt 1000 µm, Mess-Plattendurchmesser: 25 mm (Platte/Platte), bei einer fixen Scherrate von 10 s⁻¹ als Schubspannung bei einer Viskosität von 500 000 Pa*s gemessen.

10. Einkomponentige hitzehärtende Epoxidharzzusammensetzung gemäss einem der vorhergehenden Ansprüche, **dadurch gekennzeichnet, dass** die ausgehärtete einkomponentige hitzehärtende Epoxidharzzusammensetzung einem spezifischen Durchgangswiderstand gemäss DIN IEC167/ IEC93/ VDE 0303 gemessen bei 23°C/50% rel. Luftfeuchtigkeit mit einer Messspannung von 10V von ≤ 5*10¹⁰ Ωxcm, insbesondere ≤ 10¹⁰ Ωxcm, bevorzugt ≤ 10⁹ Ωxcm, insbesondere bevorzugt ≤ 5*10⁸ Ωxcm, ≤ 5*10⁸ Ωxcm - 5*10⁷ Ωxcm, aufweist.

11. Verfahren zur Verklebung von hitzestabilen Substraten umfassend die Schritte
i) Applizieren einer einkomponentigen hitzehärtenden Epoxidharzzusammensetzung gemäss einem der Ansprüche 1-10, auf die Oberfläche eines hitzestabilen Substrates **S1**, insbesondere eines Metalls;
ii) Kontaktieren der applizierten hitzehärtenden Epoxidharzzusammensetzung mit der Oberfläche eines weiteren hitzestabilen Substrates **S2**, insbesondere eines Metalls;
iii) In Kontaktbringen der Substrate **S1** und **S2** und der damit in Kontakt stehenden hitzehärtenden Epoxidharzzusammensetzung mit einem KTL-Lackierlösung, insbesondere bei einer Temperatur zwischen 20 und 80°C, insbesondere zwischen 20 und 50°C; bevorzugt zwischen 20 und 40°C, insbesondere für 1 - 15 min, besonders bevorzugt für 1 - 5 min;
iv) Erhitzen der Zusammensetzung auf eine Temperatur von 140 - 220°C, insbesondere von 140 - 200°C, bevorzugt zwischen 160 und 190°C, insbesondere für 10 - 60 min, besonders bevorzugt für 20 - 45 min,
wobei das Substrat **S2** aus dem gleichen oder einem unterschiedlichen Material wie das Substrat **S1** besteht.

12. Verfahren gemäss Anspruch 11, **dadurch gekennzeichnet, dass** vor dem Schritt iii) keine vollständige Aushärtung der applizierten Epoxidharzzusammensetzung stattfindet, insbesondere keine Aushärtung durch Erhitzen der Zusammensetzung auf eine Temperatur von 140 - 220°C, insbesondere für 10 - 60 min, besonders bevorzugt für 20 - 45 min.

13. Verwendung einer einkomponentigen hitzehärtenden Epoxidharzzusammensetzung gemäss einem der Ansprüche 1 bis 10 als hitzehärtender einkomponentiger Rohbauklebstoff im Fahrzeugbau.

14. Verklebter Artikel, insbesondere ein Fahrzeug oder ein Teil eines Fahrzeuges, welches durch ein Verfahren gemäss Anspruch 11 oder 12 erhalten wurde.

15. Verwendung eines elektrisch leitfähigen Kohlenstoffallotrops (KA) ausgewählt aus der Liste bestehend aus Leitrussen (KA-1), Graphenen (KA-2), einwandigen Kohlenstoffnanoröhren (KA-3) und mehrwandigen Kohlenstoffnanoröhren (KA-4), wie es in der Zusammensetzung gemäss einem der Ansprüche 1 bis 10 beschrieben ist, zur Verminderung des spezifischen Durchgangswiderstands gemäss DIN IEC167/ IEC93/ VDE 0303 gemessen bei 23°C/50% rel. Luftfeuchtigkeit mit einer Messspannung von 10V einer ausgehärteten einkomponentigen hitzehärtenden Epoxidharzzusammensetzung, insbesondere eines ausgehärteten hitzehärtenden Epoxidharzklebstoffs, vorzugsweise im Fahrzeugbau, in einem KTL-Beschichtungsverfahren.
